# EUROPEAN PATENT APPLICATION

(11) **EP 0 794 395 A1**
(43) Date of publication of application: **10.09.1997**
(21) Application number: 95932197.7
(22) Date of filing: 21.09.1995
(51) Int. Cl.: F24J 2/42

(54) **SOLAR THERMAL STORAGE APPARATUS AND HOT WATER SUPPLY SYSTEM INCLUDING SAME**

(30) Priority: 21.09.1994 JP 226551/94
(71) Applicant: Yugen Kaisha Shirai Syoji, Yokohama-shi, Kanagawa 220 (JP)
(72) Inventor: SHIRAI, Tohgen Yugen Kaisha Shirai Syoji, Kanagawa 220 (JP)
(74) Representative: Winkler, Andreas, Dr.
(86) International application number: JP9501900
(87) International publication number: WO9609501

(57) **Abstract**

A solar thermal storage apparatus capable of making use of solar energy to the maximum even when sunshine is insufficient in cloudy days or the like, raising a temperature of mixed water in a low temperature water season, greatly promoting energy saving and resource saving, easily making a hot water storage tank large in capacity, dividing a space for installation into several locations, adequately handling commercial applications, and contributing to prevention of global warming, and a hot water supply system including the solar thermal storage apparatus. The hot water supply system comprises a solar collector (20) for absorbing solar energy, a storage tank (30) for storing a heat medium, and a supply and delivery path (40) for circulating the heat medium in a predetermined direction. The storage tank (30) is composed of a plurality of tanks (30A - 30C) for storing the heat media of different temperature levels, respectively, and the supply and delivery path (40) is composed of a feed pipe (41) for introducing the heat medium collected by the solar collector (20) into the respective tanks (30A - 30C), connection pipes (42A, 42B) which sequentially connect lower portions of the tanks on a higher temperature side to higher portions of the tanks on a lower temperature side, and a delivery pipe (43) for delivering the heat medium in the respective tanks (30A - 30C) to the solar collector (20).

## Description

### Technical Field

This invention relates to a solar thermal storage apparatus comprises a solar collector for absorbing solar energy, hot water storage tanks for storing a heat medium, and a supply and delivery path for circulating the heat medium in a predetermined direction, and a hot water supply system which includes the solar thermal storage apparatus. Particularly it relates to the solar thermal storage apparatus that can use solar energy maximally and raise a temperature of the heat medium even when sunshine is insufficient in cloudy days or like.

### Background Art

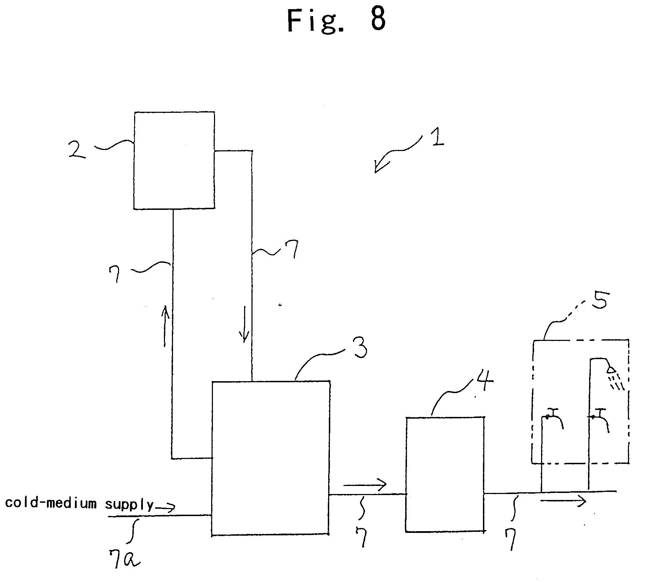

Such kind of solar thermal storage apparatus has been known for using in a solar power system 1 shown in Figure 8. The solar power system 1 comprises a solar collector 2 mounted on a roof of a building, a hot water storage tank 3 placed on the ground, an auxiliary heat source 4, such as boiler or water heater, for final water heating, a hot water supply portion 5 such as a tap or a shower head in a bathroom, and a pump (not shown) and pipes 7 which connect them. The solar collector 2 comprises plural of solar-collector panels in order to contain required heat quantity, and the hot water storage tank 3 generally comprises a tank whose capacity determined by the scale of the solar power system.

Low temperature water supplied from a water pipe to the hot water storage tank 3 through a feed water pipe 7 a is fed into the solar collector 2 and becomes high temperature water by absorbing solar energy therein. Then the high temperature water is returned into the hot water storage tank 3 and is mixed with just supplied low temperature water. The hot water stored in the hot water storage tank 3 is fed into the auxiliary heat source 4 for final heating and then supplied appropriately through the hot water supply portion 5 as the need arises.

In above-said prior art, however, the hot water from the solar collector 2 stored in the hot water storage tank 3 in which it can be mixed immediately with low temperature water from the feed water pipe 7a; therefore thermal conduction is easily occurred between the hot water and low temperature water in the storage tank 3. Thus the temperature of the hot water in the hot water storage tank 3 considerably falls to a low temperature, and large amount of thermal energy is lost. Therefore the large amount of thermal energy from the auxiliary heat source 4 is required when hot water is actually used at the hot water supply portion 5, and the solar power system does not contribute to energy saving and resource saving.

Usually it is known that the fact that the solar energy absorption efficiency of a low temperature heat medium is higher than that of a high temperature heat medium. Consequently, it is desirable to feed the low temperature water into the solar collector 2 without raising temperature, however, the low temperature water cannot be fed into the solar collector 2 with its temperature keeping because the low temperature water is immediately mixed with hot water directly in the hot water storage tank 3 and the temperature rises. This condition is related to above-mentioned thermal energy loss.

Since the hot water storage tank 3 in the solar power system 1 comprises only one tank, there are a problem of cost rising and a spatial difficulty in mounting large capacity storage tank. Accordingly, almost all solar power systems 1 are designed to use daily life in general personal house. The solar power systems 1 is insufficient to use in business use in such as a hotel.

This invention intends to solve the above-mentioned problems of the prior art. The invention can make an energy loss minimum by preventing a heat medium in lower temperature from direct contacting a heat medium in higher temperature, and can use solar energy maximum by feeding the heat medium in lower temperature to a solar collector. Therefore, the invention can greatly promote energy saving and resource saving. Furthermore, a solar thermal storage apparatus of the present invention can be made its storage tank large easily and its installation place can separate in several places, and it is sufficient to use in business use. Furthermore, this invention intends to provide a hot water supply system which includes the solar thermal storage apparatus.

### Disclosure of the Invention

The point of the present invention to accomplish the foregoing and other objects are as follows.

A solar thermal storage apparatus (10) comprising a solar collector (20) for absorbing solar energy, heat medium storage tanks (30) for storing a heat medium containing absorbed solar energy, and a supply and delivery path (40) for circulating the heat medium in a predetermined direction, the heat medium storage tank (30) comprising a plurality of tanks (30A - 30C) for storing the heat media of different temperature levels, the lower portion of the lowest temperature tank (30A) among said tanks (30A - 30C) being connected with a cold-medium pipe (51) for feeding a heat medium before collecting by the solar collector from outside, the higher portion of the highest temperature tank (30C) among said tanks (30A - 30C) being connected with a hot-medium pipe (52) for supplying the heat medium after collecting by the solar collector to outside, the delivery path (40) comprising a feed pipe (41) for introducing the hot medium collected by the solar collector (20) into the respective tanks (30A - 30C), connection pipes (42A, 42B) sequentially connected lower portions of the tanks on a higher temperature side to higher portions of the tanks on a lower temperature side, and a delivery pipe (43) for delivering the heat medium in the respective tanks (30A - 30C) to the solar collector (20).

The solar thermal storage apparatus (10) further comprising selector valves (60A - 60E) in the delivery path (40) for controlling a circulating direction of the heat medium, by selective feeding of the hot medium collected by the solar collector (20) to one of the tanks (30A - 30C) of the heat medium storage tank (30) except the highest temperature tank (30C) and by selective feeding of the heat medium in the one tank to the solar collector (20) at the first stage that the heat medium in one of the tanks (30A - 30C) except the highest temperature tank (30C) being under predetermined temperature, and by selective feeding of the hot medium collected by the solar collector (20) to the highest temperature tank (30C) and by selective feeding of the medium in said one tank to the solar collector (20) to feed the heat medium from the highest temperature tank (30C) to said one tank in order through connection pipes (42A, 42B) at the second stage that the heat medium in said one tank being reached predetermined temperature.

The above-mentioned solar thermal storage apparatus (10) further comprising a circulating pump (70) in the delivery path (40) for forced circulation of the heat medium, said circulating pump (70) being driven according to the temperature of the solar collector (20) side.

A hot water supply system (100) comprising above-mentioned solar thermal storage apparatus (10), an auxiliary heat source (91) for final heating of the heat medium from the highest tank (30C) of the solar thermal storage apparatus (10) through the hot-medium pipe (52) to predetermined temperature, and a water supply apparatus (92) for supplying medium heated by the auxiliary heat source (91).

### Brief Description of the Drawings

Fig. 1 is a schematic view of the first embodiment, a solar thermal storage apparatus, of the present invention which illustrates the construction of the first embodiment diagrammatically.

Fig. 2 is a diagrammatic construction view which explains an operation of the first embodiment, a solar thermal storage apparatus, of the present invention.

Fig. 3 is a diagrammatic construction view which explains an operation of the first embodiment, a solar thermal storage apparatus, of the present invention.

Fig. 4 is a diagrammatic construction view which explains an operation of the first embodiment, a solar thermal storage apparatus, of the present invention.

Fig. 5 is a diagrammatic construction view which explains an operation of the first embodiment, a solar thermal storage apparatus, of the present invention.

Fig. 6 is a schematic view of the second embodiment, a solar thermal storage apparatus, of the present invention which illustrates the construction of the first embodiment diagrammatically.

Fig. 7 is a schematic construction view of an embodiment, a hot water supply system, of the present invention.

Fig. 8 is a schematic construction view of a solar power system of a prior art.

### Best Modes for Carrying Out the Invention

Respective embodiments of the present invention will be now described in detail with reference to drawings.

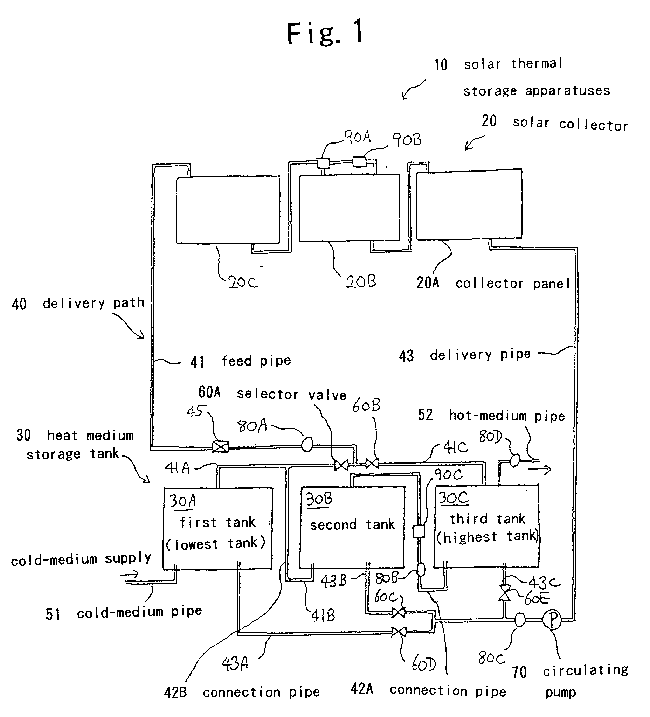

Figs 1- 5 show the first embodiment, a solar thermal storage apparatus, of the present invention.

As shown in Fig. 1, a solar thermal storage apparatus 10 comprises
a solar collector 20 for absorbing solar energy, heat medium storage tanks 30 for storing a heat medium containing absorbed solar energy and a supply and delivery path 40 for circulating the heat medium in a predetermined direction which connects the solar collector 20 and the heat medium storage tank 30. Water is typical of the heat medium. The solar thermal storage apparatus 10 heat water by solar energy and supply hot water usefully.

The solar collector 20 comprises three collector panels 20A - 20C connected by pipes (they are parts of the supply and delivery path 40) in series, and it mounted generally on the top of the building. The collector panels 20A - 20C are assembled by heat-absorber plates, heat medium paths, insulation and so forth. The collector panels 20A - 20C can be heightened solar energy absorption efficiency by supporting them capable of adjusting their inclination angles according to motion of the sun and by frosted coating their surfaces.

One end of a delivery pipe 43 is connected to the first collector panel 20A and one end of a feed pipe 41 is connected to the third collector panel 20C. The pipe that connects the second collector panel 20B and the third collector panel 20C is equipped with thermostats 90A and 90B that their operating temperatures are different from each other. A number of the collector panels 20A - 20C is not limited to three, they may be increased or decreased according to required heat capacity.

The heat medium storage tank 30 is composed of three tanks 30A - 30C for storing the heat media of different temperature levels. In other words, the heat medium storage tank 30 is composed of the first tank (the lowest temperature tank) 30A for storing the heat medium of the lowest temperature level, the second tank 30B for storing the heat medium of the intermediate temperature level and the third tank (the highest temperature tank) 30C for storing the heat medium of the highest temperature level.

A cold-medium pipe 51 for supplying cold water from a water pipe is connected to lower portion of the first tank 30A, and a hot-medium pipe 52 for supplying the heat medium after collecting by the solar collector to outside is connected to higher portion of the third tank 30C. A temperature sensor 80D for measuring temperature of the hot water delivering outside is set on the hot-medium pipe 52.

The tanks 30A - 30C are generally placed on the ground. Specifically, each of tanks 30A - 30C can be various tank such as only a heat insulating tank or water heater equipped with electric heater. Capacity of each of tanks 30A - 30C may be determined by the solar thermal storage apparatus 10. In this embodiment, for example, a capacity of each tank 30A - 30C is assumed about 1,000 liter for business use such as in a business hotel. These tanks 30A - 30C and the solar collector 20 are connected by a supply and delivery path 40 which circulates the heat medium in a predetermined direction. The delivery path 40 comprises a feed pipe 41 for introducing the hot medium collected by the solar collector 20 into the respective tanks 30A - 30C, connection pipes 42A, 42B sequentially connected lower portions of the tanks on a higher temperature side to higher portions of the tanks on a lower temperature side, and a delivery pipe 43 for delivering the heat medium in the respective tanks 30A - 30C to the solar collector 20.

To explain in detail, the feed pipe 41 extending from the collector panel 20C is equipped with a check valve 45 which operates so as to prevent the heat medium from flowing backward and is equipped with a temperature sensor 80A for measuring the temperature of the heat medium fed from the solar collector 20 side. The feed pipe 41 has three pipes, that is , the first feed pipe 41A connected to the first tank 30A, the second feed pipe 41B connected to the second tank 30B and the third feed pipe 41C connected to the third tank 30C.

A lower portion of the third tank 30C and a higher portion of the second tank 30B are connected by the connection pipe 42A. Similarly, a lower portion of the second tank 30B and a higher portion of the first tank 30A are connected by the connection pipe 42B. The connection pipe 42A is equipped with a thermostat 90C which selects, at a predetermined temperature, either the thermostat 90A or the thermostat 90B to make the selected one to operate. Furthermore, the connection pipe 42A is equipped with a temperature sensor 80B for measuring temperature of the hot water fed from the lower portion of the third tank 30C. The second feed pipe 41B and the connection pipe 42B indicate different portions of the same pipe.

The first delivery pipe 43A is connected to the lower portion of the tank 30A, the second delivery pipe 43B is connected to the lower portion of the tank 30B, the third delivery pipe 43C is connected to the lower portion of the tank 30C; they are connected to a delivery pipe 43 whose one end is connected to the collector panel 20A. The delivery pipe 43 is equipped with a circulating pump 70 for circulating the heat medium smoothly and a temperature sensor 80C for measuring the heat medium fed from respective tanks 30A - 30C to the solar collector 20 side.

The circulating pump 70 is set so as to work when the thermostat 90A is in a operatable state by switching operation of the thermostat 90C and it measured the predetermined temperature or the thermostat 90B is in a operatable state by switching operation of the thermostat 90C and it measured the predetermined temperature. In this embodiment, for example, water temperature is assumed to be about 25 degrees centigrade, and the predetermined temperatures of the thermostat 90A and 90B are set at 30 degrees centigrade and at 50 degrees centigrade respectively, and a switching operation temperature of the thermostat 90C is set at 45 degrees centigrade. These concrete operation will be explained hereinafter.

Selector valves 60A - 60E are located in the delivery path 40, in detail, near divergence point and in respective delivery pipes 43A - 43C. These selector valves 60A - 60E may be magnetic valves which can switching operation automatically or they may be hand-operated valves.

The summary of the operation of the embodiment, for example switching operation of these selector valves 60A - 60E, will be explained next.

As shown in Fig. 1, the heat medium storage tank 30 comprises three tanks 30A - 30C for storing the heat media of different temperature levels; therefore the heat medium in the first tank 30A( lower temperature side ) and the heat medium in the third tank 30C( higher temperature side ) can be stored in isolated state. Thus direct contacting of the higher temperature heat medium and the lower temperature heat medium is avoided, and the heat of the higher temperature heat medium can be prevented from transferring to the lower temperature heat medium and a loss of the thermal energy collected by the solar collector 20 can be made minimum.

In particular, the lower portion of the first tank 30A is connected with the cold-medium pipe 51 for feeding a heat medium before collecting solar energy by the solar collector from outside, and the higher portion of the third tank 30C is connected with the hot-medium pipe 52 for supplying the heat medium after collecting solar energy; therefore, the heat medium in the higher side can be maintain without decreasing high temperature.

The present apparatus can control circulating direction properly as explained hereinafter because it is equipped with selector valves 60A - 60E at appropriate portions in the delivery path 40.

It will be explained first that the case that hot water is fed selectively to the first tank 30A that is the lowest temperature tank among heat medium storage tanks 30.

The first stage when the solar thermal storage apparatus 10 begins operation assumed the time when sunshine is insufficient such as in the morning. In this first stage, the temperature of the heat medium in the first tank 30A has not reached at a predetermined temperature (in this example, it is set at 40 degrees centigrade) ; therefore the first tank 30A is selectively supplied the hot medium collected by the solar collector 20, and the heat medium in the first tank 30A is selectively fed into the solar collector 20.

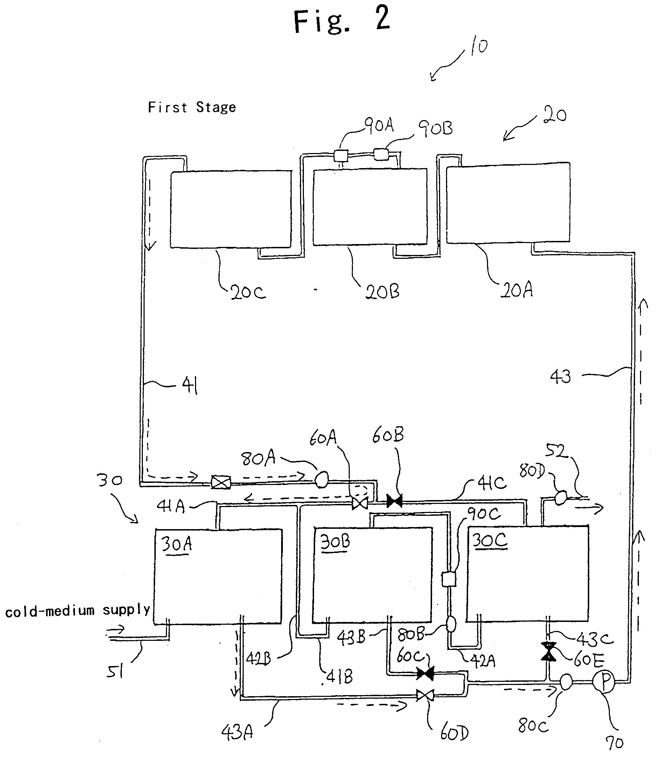

In the first stage, as shown in Fig. 2, the selector valves 60A and 60D in the delivery path 40 are opened, and the selector valves 60B, 60C and 60E shown by blacked symbols are closed. Then the heat medium circulates between the whole solar collector 20 and the first tank 30A as shown by broken lines in Fig. 2. In this condition, if the temperature measured by the thermostat 90A in the collector panel 20A side reached at an operating temperature or 30 degrees centigrade, the circulating pump 70 begins to operate.

In the first stage, even in the time when sunshine is insufficient such as in the morning, the temperature level in the whole heat medium storage tanks 30 can be raised by feeding the heat medium only in the first tank 30A (lower temperature side) into the solar collector 20 for warming the heat medium in the lower temperature side. Such a feeding of the heat medium in the first tank 30A (lower temperature side) into the solar collector 20 contributes to raise the solar energy absorption efficiency. Thus, the temperature of the heat medium can be raised even when sunshine is insufficient in cloudy days or the like.

Furthermore in the first stage, the heat medium in the third tank 30C (higher temperature side) is not mixed with the heat medium in the first tank 30A (lower temperature side), thereby being never lost thermal energy undesirably; therefore the heat medium is supplied with keeping high temperature. The heat medium in the higher temperature side is not fed into the solar collector 20 when sunshine is insufficient as above-mentioned and the solar energy absorption efficiency is low, thereby preventing thermal energy loss by heat medium circulating.

When the heat medium in the first tank 30A side reaches at the predetermined temperature or 40 degrees centigrade by absorbing solar energy in the solar collector 20, the first stage is changed to the second stage by automatic or manual adjustment of the selector valves 60A - 60E. The temperature measurement of the heat medium in the first tank 30A side may be done by eye measurement of the temperature sensor 80A in the feed pipe 41. Concretely, when the temperature sensor 80A indicates 45 degrees centigrade, the temperature of the heat medium in the first tank 30A is about 40 degrees centigrade. At the second stage, the time when sunshine is sufficient such as in the noon is assumed.

In the second stage, the temperature of the heat medium in the first tank 30A side reaches at 40 degrees centigrade, the heat medium which absorbed solar energy in the solar collector 20 is selectively fed into the third tank 30C which is in highest side, and simultaneously the heat medium is fed from the third tank 30C to the first tank 30A in turn through the connection pipes 42A, 42B, on the other hand, the heat medium in the first tank 30A is fed into the solar collector 20 selectively.

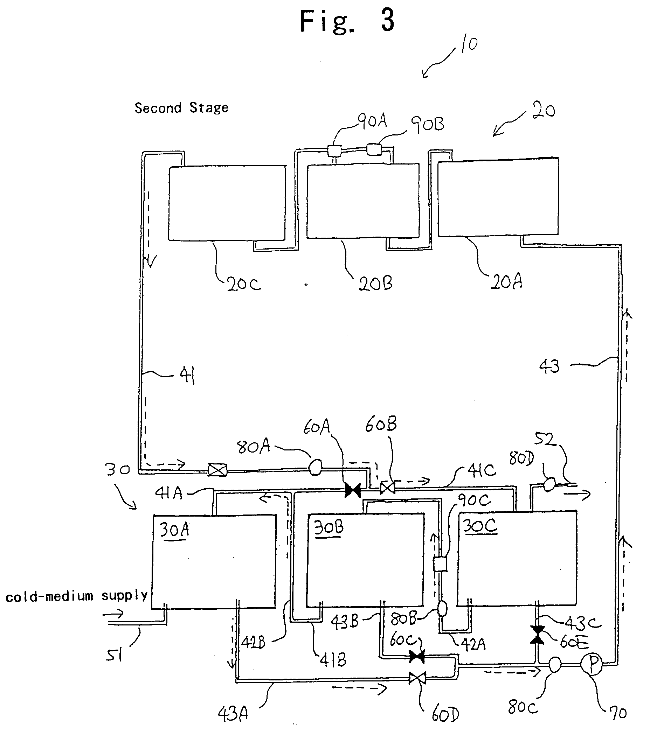

In the second stage, as shown in Fig. 3, the selector valves 60B and 60D in the delivery path 40 are opened, and the selector valves 60A, 60C and 60E shown by blacked symbols are closed. Then the heat medium circulates to the direction as shown by broken lines in Fig. 3, that is, the solar collector 20 → the third tank 30C → the second tank 30B → the first tank 30A → the solar collector 20.

Thus in the second stage, the heat medium is fed from the third tank 30C to the tanks in lower temperature side and the solar collector 20 in turn through different temperature levels by feeding the heat medium from the most low portion of higher temperature tank to the highest portion of lower temperature tank. The thermal energy loss of the heat medium in the circulation can be suppressed minimum and use solar energy maximum.

In the second stage, when the thermostat 90C in the connection pipe 42A measured 45 degrees centigrade or its switching operation temperature, the thermostat 90A is turned off and the thermostat 90B is turned on by automatic switching of the thermostat 90C, and then the operation of the circulating pump 70 stops temporarily. Then if the thermostat 90B measured 50 degrees centigrade or its switching operation temperature, the circulating pump 70 begins to operate again.

If sunshine decrease for example according to motion of the sun, the operation of the circulating pump 70 is stopped by control of the thermostats 90A - 90C. Since the circulating pump 70 is controlled based on the temperature of the solar collector 20 side as above-mentioned, the heat loss of the heat medium occurs when it fed from the hot water storage tanks 30 into the solar collector 20 such as after sunset is limited minimum by stopping circulation of the heat medium.

Since the heat medium storage tanks 30 comprises a plurality of tanks 30A - 30C as above-mentioned, even if a capacity of each tank 30A - 30C is standardized, the capacity of the heat medium storage storage tanks 30 can change freely by increasing or decreasing a number of each tank 30A - 30C. A space for installation need not to be one place and can be separate in several locations every tank 30A - 30C.

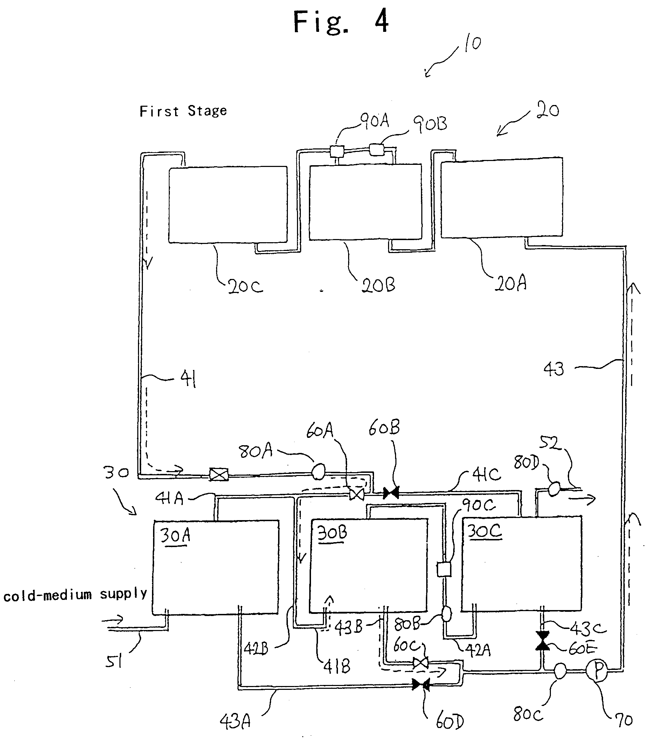

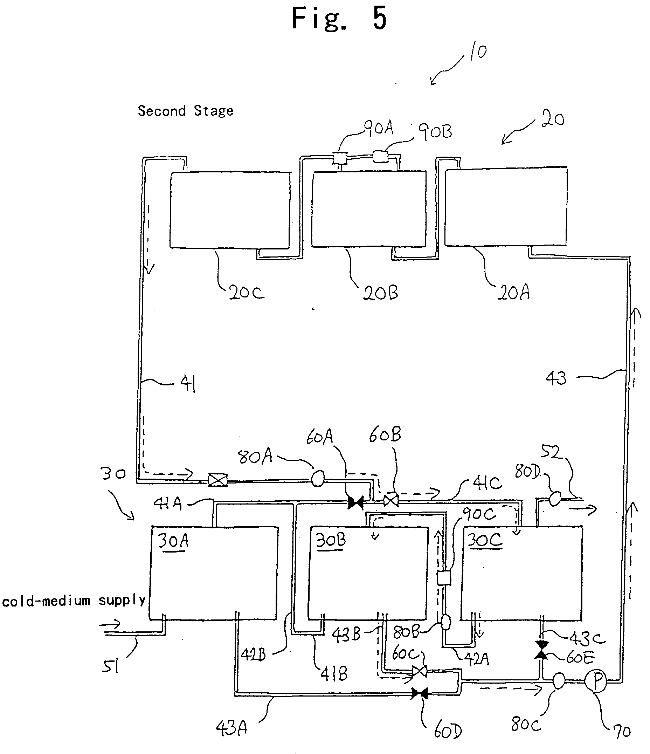

Storage amount of the heat in the heat medium storage storage tanks 30 can be changed by changing a number of tanks from the third tank 30C to the lower side tanks. When sunshine is assumed insufficient all day, for example it is cloudy all day, it is generally difficult to heat all heat media in three tanks 30A - 30C to 40 degrees centigrade only by solar energy; so the circular systems like the first stage or second stage may be formed by the heat medium storage second tank 30B and the third tank 30C except the first tank 30A. This example will be explained next seeing with Fig. 4 and Fig. 5.

In first stage when the solar thermal storage apparatus 10 begins operation, as shown in Fig. 4, the selector valves 60A and 60C among the selector valves 60A - 60E in the delivery path 40 are opened and the selector valves 60B, 60D and 60E shown by blacked symbols are closed. Then the heat medium is fed from the solar collector 20 into the second tank 30B as shown by broken lines, and then fed from the second tank 30B into the solar collector 20. When the temperature of the heat medium in the second tank 30B side reaches on the predetermined temperature or 40 degrees centigrade by thermal absorption in the solar collector 20, the first stage is changed to next second stage by automatic or manual adjusting of the selector valves 60A - 60E.

In the second stage, as shown Fig. 5, the selector valves 60B and 60C among the selector valves 60A - 60D in the delivery path 40 are opened and the selector valves 60A, 60D and 60E shown by blacked symbols are closed. Then the heat medium circulates to the direction as shown by broken lines, that is, the solar collector 20 → the third tank 30C → the second tank 30B → the solar collector 20. In this circulating system which eliminates the first tank 30A, a start and a stop of operation of the circulating pump 70 are also controlled by the thermostat 90A - 90C as explained above.

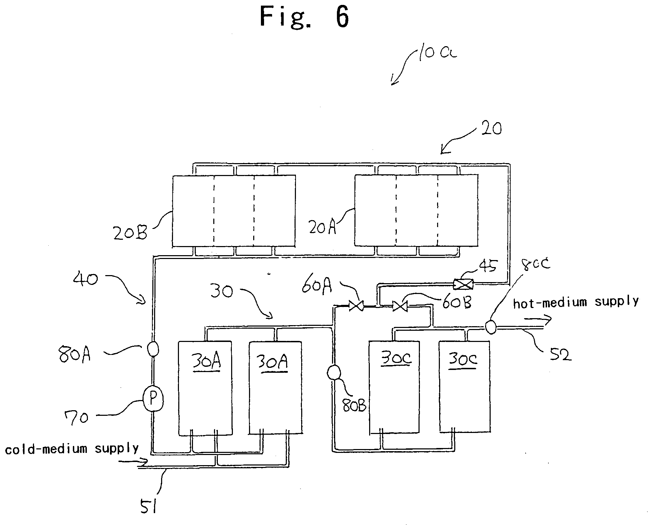

Figs 6 shows the second embodiment, a solar thermal storage apparatus, of the present invention.

Although a solar thermal storage apparatus 10a of the present embodiment, similar to the thermal storage apparatus 10 of the first embodiment, comprises a solar collector 20, heat medium storage tanks 30 and delivery path 40 which connects the solar collector 20 and the heat medium storage tank 30, it has some difference as follows. The solar collector 20 comprises two collector panel 20A and 20B. The heat medium storage tanks 30 comprises two tanks or the lowest temperature tank 30A and the highest temperature tank 30C; furthermore, respective tanks 30A and 30B are combined with two division tanks.

Thus the concrete composition of the solar thermal storage apparatus may be modified according to required quantity of heat and a scale of the system, and so the concrete composition of the solar collector 20 or the heat medium storage tanks 30 should not be defined to that of each embodiment shown in figures. Also an arrangement of the delivery path 40, selector valves 60A, 60B and the circulating pump 70 may be modified as long as it circulates the heat medium in above-mentioned predetermined direction. In this embodiment, portions similar to the first embodiment is numbered same to the first one and their same explanations are omitted.

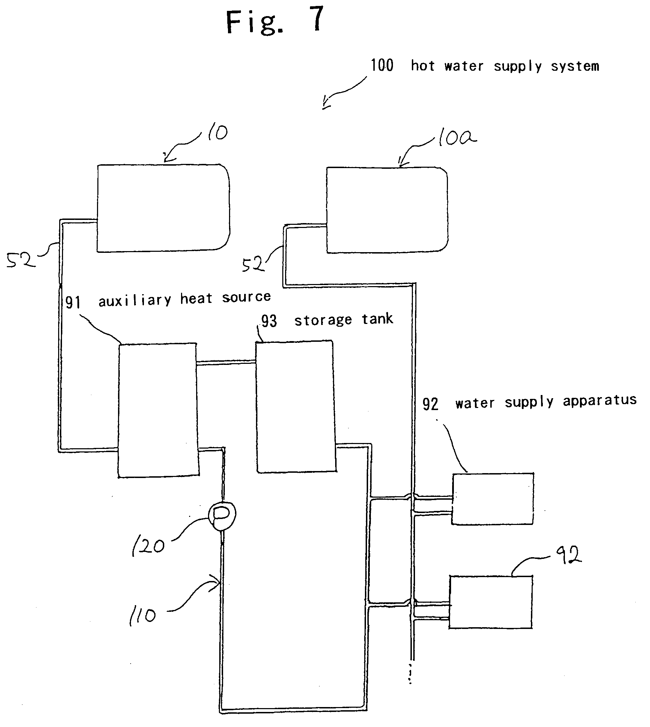

A hot water supply system of the present invention is shown in Fig. 7.

As shown in Fig. 7, a hot water supply system 100 comprises above-mentioned solar thermal storage apparatuses 10 and 10a, an auxiliary heat source 91 which heats finally the heat medium fed from one of the solar thermal storage apparatuses, a storage tank 93 which stores predetermined amount of the heat medium heated by the auxiliary heat source 91 and a water supply apparatus 92 which supplies hot water. These components are successively connected by pipes 110 including a pump 120 as shown in Fig. 7.

To explain in detail, a hot-medium pipe 52 extending from a third tank 30C of one solar thermal storage apparatus 10 is connected to the auxiliary heat source 91, and a hot-medium pipe 52 extending from a third tank 30C of the other solar thermal storage apparatus 10a is directly connected to the water supply apparatus 92. The solar thermal storage apparatuses 10 and 10a may be connected by a bypass pipe (not shown).

The hot water supply system 100 can be controlled to use only one solar thermal storage apparatus 10 when the other solar thermal storage apparatus 10 is not necessary in summer or the like.

In this case, the auxiliary heat source 91 is concretely a usual boiler, but it may be a hot water heater and so on. Specifically, the storage tank 93 can be various tank such as only a heat insulating tank or water heater equipped with electric heater. Capacity of the storage tank 93 may be determined by the scale of the hot water supply system 100. The water supply apparatus 92 may be anything which supplies hot water finally such as a tap or a shower head in a bathroom.

According to the hot water supply system 100, hot water stored in the heat medium storage storage tanks 30 of the solar thermal storage apparatuses 10 is fed into the auxiliary heat source 91 and heated finally to the predetermined temperature, and then it is supplied appropriately by the water supply apparatus 92 according to requirement. The hot water stored in the heat medium storage tanks 30 of the solar thermal storage apparatuses 10a is directly fed into the water supply apparatus 92 appropriately according to requirement and used.

In this case, since respective solar thermal storage apparatuses 10 and 10a can absorb the solar thermal energy enough and efficiently and make use it sufficiently, the auxiliary heat source 91 may be used minimum and can be down its capacity. Thus the hot water supply system 100 greatly promotes energy and resource saving and environmental purification.

The solar thermal storage apparatus and the hot water supply system comprises the solar thermal storage apparatus should not be defined to the concrete components of above-mentioned embodiment.

### Industrial Applicability

The solar thermal storage apparatus can make an energy loss minimum by preventing a heat medium in lower temperature from direct contacting a heat medium in higher temperature, and can use solar energy maximum by feeding the heat medium in lower temperature to a solar collector. Especially even when sunshine is insufficient such as in cloudy days or the like, the solar thermal storage apparatus can raise the temperature of a heat medium and can raise mixed water in the low temperature water season; therefore, the solar thermal storage apparatus greatly promotes energy and resource saving. Furthermore the solar thermal storage apparatus easily makes the hot water storage tanks large in capacity, divides a space for installation into several locations, and adequately handles commercial applications. According to the hot water supply system of the present invention, the solar thermal storage apparatus can absorb the solar thermal energy enough and efficiently and make use it sufficiently, and so the auxiliary heat source can be used minimum and down its capacity; thereby, energy and resource saving and environmental purification are promoted practically and greatly. The hot water supply system also ca contribute to prevent global warming.

## Claims

1. A solar thermal storage apparatus (10) comprising;
a solar collector (20) for absorbing solar energy;
heat medium storage tanks (30) for storing a heat medium containing absorbed solar energy; and
a supply and delivery path (40) for circulating the heat medium in a predetermined direction,
said heat medium storage tanks (30) having a plurality of tanks (30A - 30C) for storing the heat media of different temperature levels,
the lower portion of the lowest temperature tank (30A) among said tanks (30A - 30C) being connected with a cold-medium pipe (51) for feeding a heat medium before collecting by the solar collector from outside,
the higher portion of the highest temperature tank (30C) among said tanks (30A - 30C) being connected with a hot-medium pipe (52) for supplying the heat medium after collecting by the solar collector to outside,
the delivery path (40) having a feed pipe (41) for introducing the hot medium collected by the solar collector (20) into the respective tanks (30A - 30C), connection pipes (42A, 42B) sequentially connected lower portions of the tanks on a higher temperature side to higher portions of the tanks on a lower temperature side, and a delivery pipe (43) for delivering the heat medium in the respective tanks (30A - 30C) to the solar collector (20).

2. The solar thermal storage apparatus (10) as in claim 1, further comprising selector valves (60A - 60E) in the delivery path (40) for controlling a circulating direction of the heat medium, by selective feeding of the hot medium collected by the solar collector (20) to one of the tanks (30A - 30C) of the hot water storage tanks (30) except the highest temperature tank (30C) and by selective feeding of the heat medium in the one tank to the solar collector (20) at the first stage that the heat medium in one of the tanks (30A - 30C) except the highest temperature tank (30C) being under predetermined temperature, and by selective feeding of the hot medium collected by the solar collector (20) to the highest temperature tank (30C) and by selective feeding of the medium in said one tank to the solar collector (20) to feed the heat medium from the highest temperature tank (30C) to said one tank in order through connection pipes (42A, 42B) at the second stage that the heat medium in said one tank being reached predetermined temperature.

3. The solar thermal storage apparatus (10) as in claim 1 or 2, further comprising a circulating pump (70) in the delivery path (40) for forced circulation of the heat medium, said circulating pump (70) being driven according to the temperature of the solar collector (20) side.

4. A hot water supply system (100) comprising;
the solar thermal storage apparatus (10) as in claim 1, 2 or 3;
an auxiliary heat source (91) for final heating of the heat medium from the highest tank (30C) of the solar thermal storage apparatus (10) through the hot-medium pipe (52) to predetermined temperature; and
a water supply apparatus (92) for supplying medium heated by the auxiliary heat source (91).

## Amended claims

### Amended claims under Art. 19.1 PCT

1. (deleted)
2. (amended) A solar thermal storage apparatus (10) comprising;
a solar collector (20) for absorbing solar energy;
heat medium storage tanks (30) for storing a heat medium containing absorbed solar energy;
a supply and delivery path (40) for circulating the heat medium in a predetermined direction; and
selector valves (60A - 60E) in the delivery path (40) for controlling a circulating direction of the heat medium,
said heat medium storage tanks (30) having a plurality of tanks (30A - 30C) for storing the heat media of different temperature levels,
the lower portion of the lowest temperature tank (30A) among said tanks (30A - 30C) being connected with a cold-medium pipe (51) for feeding a heat medium before collecting by the solar collector from outside,
the higher portion of the highest temperature tank (30C) among said tanks (30A - 30C) being connected with a hot-medium pipe (52) for supplying the heat medium after collecting by the solar collector to outside,
the delivery path (40) having a feed pipe (41) for introducing the hot medium collected by the solar collector (20) into the respective tanks (30A - 30C), connection pipes (42A, 42B) sequentially connected lower portions of the tanks on a higher temperature side to higher portions of the tanks on a lower temperature side, and a delivery pipe (43) for delivering the heat medium in the respective tanks (30A - 30C) to the solar collector (20),
said selector valves (60A - 60E) controlling a circulating direction of the heat mediumby selective feeding of the hot medium collected by the solar collector (20) to one of the tanks (30A - 30C) of the heat medium storage tanks (30) except the highest temperature tank (30C) and by selective feeding of the heat medium in the one tank to the solar collector (20) at the first stage that the heat medium in the lowest temperature tank (30A) among said tanks (30A - 30C) being under predetermined temperature, and by selective feeding of the hot medium collected by the solar collector (20) to the highest temperature tank (30C) and by selective feeding of the medium in said one tank to the solar collector (20) to feed the heat medium from the highest temperature tank (30C) to said one tank in order through connection pipes (42A, 42B) at the second stage that the heat medium in said one tank being reached predetermined temperature.
3. The solar thermal storage apparatus (10) as in claim 1 or 2, further comprising a circulating pump (70) in the delivery path (40) for forced circulation of the heat medium, said circulating pump (70) being driven according to the temperature of the solar collector (20) side.
4. (amended) A hot water supply system (100) comprising;
the solar thermal storage apparatus (10, 10a) as in claim 1, 2 or 3;
an auxiliary heat source (91) for final heating of the heat medium from the highest tank (30C) of the solar thermal storage apparatus (10) through the hot-medium pipe (52) to predetermined temperature; and
a water supply apparatus (92) for selective supplying medium heated by the auxiliary heat source (91) or medium absorbed thermal energy in the other solar thermal storage apparatus (10a) and fed directly into there through the hot-medium pipe (52).

Statement under Art. 19.1 PCT
In an invention of claim 1, when heat medium is circulated in a given direction, a group of highest temperature tank and some tanks is always selected from a plurality of tanks that constitute heat medium storage tanks.

In actual operation, at the first stage when the medium temperature in lowest temperature tank in the group does not reach a given temperature, hot heat medium is fed into one tank of the group from a solar collector and heat medium in said one tank is fed into the solar collector. At the second stage when the medium temperature in tanks of the group reach the given temperature, the hot heat medium in the solar collector is fed into the highest temperature tank and the heat medium in the highest temperature tank is fed into other tanks by turns, and said one tank is fed into the solar collector.

An invention of cited reference 1(JP, 59-150256, A) also comprises a plurality of tanks, but operation for feeding heat media into respective tanks is quite different. In the invention of the reference 1, all tanks are used in operation; therefore, hot heat medium is always fed into the lowest temperature tank.

With respect to the invention of claim 1 of this application, since it can select a supply and delivery path for circulating the heat medium without including low temperature tanks coping with the weather, it can prevent loss of storage amount of the heat even when thermal energy from sun cannot be expected such as in cloudy days or rainy days.

An invention of cited reference 2(JP, 58-54, A) operates to feed a hot heat medium into high temperature tanks from the beginning. With respect to the invention of claim 1 of this application, it improves solar energy absorption efficiency of the solar collector by making the heat medium in the lower tanks at first to absorb solar energy. There is no description about ideas to improve solar energy absorption efficiency or the solar collector in the cited reference.

An invention of claim 4 of this application makes it clear that the heat medium fed into a hot water supply apparatus can be selected from the heat medium feeding from the solar thermal storage apparatus through an auxiliary heat source or the heat medium directly from the solar thermal storage apparatus.

An invention of cited reference 4(JP, 5-126413, A) operates to feed always a hot heat medium heated by solar energy into a hot water supply apparatus through an auxiliary heat source.

A hot water supply system of SHIRAI's invention can select the heat medium as mentioned above, and energy saving is promoted practically and greatly.
